# EUROPEAN PATENT APPLICATION

(11) **EP 4 806 747 A1**
(43) Date of publication of application: **16.09.2026**
(21) Application number: 25899448.2
(22) Date of filing: 25.07.2025
(51) Int. Cl.: B60W 30/12, B60W 30/18, B60W 40/06

(54) **LANE KEEPING AND LANE CHANGING CONTROL METHOD AND APPARATUS FOR VEHICLE, DEVICE, AND MEDIUM**

(30) Priority: 12.12.2024 CN 202411831340
(71) Applicant: Chery Automobile Co., Ltd., Wuhu, Anhui 241006 (CN)
(72) Inventor: ZHANG, Jiaqi, Wuhu, Anhui 241006 (CN); QU, Yuan, Wuhu, Anhui 241006 (CN); LIU, Wei, Wuhu, Anhui 241006 (CN); CHEN, Songshan, Wuhu, Anhui 241006 (CN); SHAN, Yuejun, Wuhu, Anhui 241006 (CN)
(74) Representative: Adamson Jones
(86) International application number: PCT/CN2025/110574
(87) International publication number: WO 2026/123698

(57) **Abstract**

The present disclosure proposes a method and apparatus for controlling lane keeping and lane changing, and a device and a medium thereof . It can acquire lane lines by detecting, using a lane detection model, the image of the road directly ahead of the target vehicle; determine a pixel reference point in the image of the road directly ahead of the target vehicle based on speed of the target vehicle; acquire a closest pixel point group by traversing and filtering, using a greedy algorithm, the pixel point closest to the pixel reference point from the pixel point group corresponding to each lane line; and sort pixel points in the closest pixel point group, determine the lane center pixel point by calculating the mean value of adjacent closest pixel points based on the sorting result, and control lane keeping or lane changing of the target vehicle based on the determined lane center pixel point. This reduces the demand for computing resources of the lane keeping system and improves the real-time performance and stability of the system.

## Description

The present disclosure claims priority to Chinese Patent Application No. 202411831340.9, filed December 12, 2024, and entitled "METHOD AND APPARATUS FOR CONTROLLING LANE KEEPING AND LANE CHANGING, DEVICE, AND MEDIUM," the entire content of which is incorporated herein by reference.

### TECHNICAL FIELD

The present disclosure pertains to the technical field of vehicle traveling, and more particularly, relates to a method and apparatus for controlling lane keeping and lane changing, and a device and a medium thereof.

### BACKGROUND

The statements in this section merely provide background technical information related to the present disclosure and may not necessarily constitute prior art.

Vehicle traveling is easily influenced by surrounding vehicles, roads, and the vehicle's own state, and the corresponding reaction time needs to be extended, greatly affecting road traffic safety. It is understood that traffic accidents caused by lane departure account for about 20% of all traffic accidents, and fatal accidents account for about 30% of all traffic accidents. To reduce human-caused safety accidents and for other purposes, autonomous driving technology has become a hot topic pursued by research institutions and enterprises at home and abroad in recent years, and lane keeping and lane changing are important components thereof. Lane keeping involves calculating the relative position of the lane line read by the front camera and the vehicle itself through on-board domain control, to keep the vehicle body from deviating from the lane, while lane changing involves changing the vehicle's trajectory to the adjacent lane.

At the current stage, lane detection-based lane keeping or lane changing control faces issues of a waste of computing resources, as well as poor real-time performance and stability.

### SUMMARY

To overcome the deficiencies of the existing technology mentioned above, the present disclosure provides a method and apparatus for controlling lane keeping and lane changing, and a device and medium thereof, which reduces the demand for computing resources of the lane keeping system, improves the real-time performance and stability of the system, and enhances the comfort of passengers during lane keeping and lane changing.

To achieve the above objectives, the present disclosure adopts the following technical solutions.

In a first aspect, the present disclosure provides a method for controlling lane keeping and lane changing, including:
acquiring an image of a road directly ahead of a target vehicle;
determining lane lines in the image of the road directly ahead of the target vehicle by detecting, using a lane detection model, the acquired image of the road directly ahead of the target vehicle;
determining a pixel reference point in the image of the road directly ahead of the target vehicle based on a speed of the target vehicle;
acquiring a closest pixel point group by traversing and filtering, using a greedy algorithm, a pixel point closest to the pixel reference point from a pixel point group corresponding to each lane line; and
sorting pixel points in the closest pixel point group, determining a lane center pixel point by calculating a mean value of adjacent closest pixel points based on a sorting result, and controlling lane keeping or lane changing of the target vehicle based on the determined lane center pixel point.

Furthermore, the acquired image of the road directly ahead of the target vehicle is preprocessed, wherein preprocessing comprises image cropping and normalization.

Furthermore, determining the pixel reference point in the image of the road directly ahead of the target vehicle based on the speed of the target vehicle includes:
determining an image center point of the image of the road directly ahead of the target vehicle;
determining a first pixel point above the image center point in a direction away from the target vehicle;
determining a second pixel point below the image center point in a direction close to the target vehicle;
determining the first pixel point as the pixel reference point of the target vehicle in a case where a traveling speed of the target vehicle is greater than a first speed threshold; and
determining the second pixel point as the pixel reference point of the target vehicle in a case where the a traveling speed of the target vehicle is less than the first speed threshold.

Furthermore, acquiring the closest pixel point group by traversing and filtering, using the greedy algorithm, the pixel point closest to the pixel reference point from the pixel point group corresponding to each lane line includes:
calculating a distance between a vertical coordinate of a pixel point corresponding to each lane line and a vertical coordinate of the pixel reference point of the target vehicle; and
determining the pixel point closest to the pixel reference point of the target vehicle in each lane line based on distance calculation results.

Furthermore, sorting pixel points in the closest pixel point group, determining the lane center pixel point by calculating the mean value of adjacent closest pixel points based on the sorting result, and controlling lane keeping or lane changing of the target vehicle based on a determined lane center pixel point include:
sorting the pixel points in the closest pixel point group based on horizontal coordinates of the pixel points in the closest pixel point group;
determining the lane center pixel point by calculating, based on a sorting result, the mean value of the adjacent closest pixel points;
calculating a distance between the lane center pixel point and the pixel reference point of the target vehicle; and
controlling the lane keeping or lane changing of the target vehicle based on the calculated distance.

Furthermore, controlling the lane keeping or lane changing of the target vehicle based on the calculated distance includes: controlling the target vehicle to keep traveling in the lane in a case where the lane center pixel point is a center point of a driving lane of the target vehicle; and controlling the target vehicle to perform lane changing in a case where the lane center pixel point is a center point of a side lane of the target vehicle.

In a second aspect, the present disclosure provides an apparatus for controlling lane keeping and lane changing, including:
an acquiring module, configured to acquire an image of a road directly ahead of a target vehicle;
a detecting module, configured to determine lane lines in the image of the road directly ahead of the target vehicle by detecting, using a lane line detection model, the acquired image of the road directly ahead of the target vehicle;
a determining module, configured to determine a pixel reference point in the image of the road directly ahead of the target vehicle based on speed of the target vehicle;
a filtering module, configured to acquire a closest pixel point group by traversing and filtering, using a greedy algorithm, a pixel point closest to the pixel reference point from a pixel point group corresponding to each lane line; and
a controlling module, configured to sort pixel points in the closest pixel point group, determine a lane center pixel point by calculating a mean value of adjacent closest pixel points based on a sorting result, and control lane keeping or lane changing of the target vehicle based on a determined lane center pixel point.

In a third aspect, the present disclosure provides an electronic device including a memory, a processor, and computer instructions stored on the memory and executed by the processor, wherein the computer instructions, when executed by the processor, cause the electronic device to perform the method described in the first aspect.

In the fourth aspect, the present disclosure provides a computer-readable storage medium for storing computer instructions, wherein the computer instructions, when executed by a processor, cause the processor to perform the method described in the first aspect.

In the fifth aspect, the present disclosure provides a computer program product including a computer program, wherein the computer program, when executed by a processor, causes the processor to perform the method described in the first aspect.

The above one or more technical solutions achieve the following beneficial effects.

In the present disclosure, the image of the road directly ahead of the target vehicle can be detected through an existing lane detection model to acquire lane lines; based on the speed of the target vehicle, the pixel reference point in the image of the road directly ahead of the target vehicle is determined; the greedy algorithm is used to traverse and filter the pixel point closest to the pixel reference point from the pixel point group corresponding to each lane line, acquiring the closest pixel point group; the pixel points in the closest pixel point group are sorted, and the mean value of adjacent closest pixel points is calculated based on the sorting result to determine the lane center pixel point; based on the determined lane center pixel point, the lane keeping or lane changing of the target vehicle is controlled. The present disclosure performs corresponding lane keeping or lane changing control through pixel point calculation and comparison, reducing the demand for computing resources of the lane keeping system and improving the real-time performance and stability of the system. Moreover, by determining the pixel reference point based on the speed of the target vehicle, the present disclosure can adapt to the current state of the target vehicle, ensuring control accuracy while improving occupant comfort during lane keeping and lane changing.

The advantages of additional aspects of the present disclosure will be set forth in part in the description which follows, and in part will be obvious from the description, or may be learned by practice of the present disclosure.

### BRIEF DESCRIPTION OF DRAWINGS

The drawings accompanying the specification, which form part of the present disclosure, are intended to provide further understanding of the present disclosure. The illustrative embodiments of the present disclosure and their descriptions are used to explain the present disclosure and do not constitute undue limitations on the present disclosure.
FIG. 1 is a flowchart of a method for controlling lane keeping and lane changing according to some embodiments of the present disclosure;
FIG. 2 is an overall flowchart of a method for controlling lane keeping and lane changing according to some embodiments of the present disclosure;
FIG. 3 is a schematic diagram of the processing process for the acquired image of the road directly ahead of the target vehicle according to some embodiments of the present disclosure;
FIG. 4 is a schematic diagram of a reference pixel point according to some embodiments of the present disclosure;
FIG. 5 is a schematic diagram of the greedy algorithm traversal and filtering process according to some embodiments of the present disclosure;
FIG. 6 is a schematic diagram of real lane lines and inferred lane lines, as well as each pixel point, according to some embodiments of the present disclosure;
FIG. 7 is a schematic structural diagram of an apparatus for controlling lane keeping and lane changing according to some embodiments of the present disclosure; and
FIG. 8 is a structural block diagram of a terminal according to some embodiments of the present disclosure.

### DETAILED DESCRIPTION

It should be noted that the following detailed description is exemplary and intended to provide further clarification of the present disclosure. Unless otherwise indicated, all technical and scientific terms used herein have the same meaning as commonly understood by those skilled in the technical field to which the present disclosure pertains.

It should be noted that the terms used herein are merely for describing specific embodiments and are not intended to limit the exemplary embodiments according to the present disclosure.

Without conflict, embodiments of the present disclosure and features within embodiments can be combined with each other.

Currently, lane-line detection can typically be achieved through two types of lane-line detection algorithms: model-based and feature-based, which facilitate the control of vehicle maintenance or lane changing. However, model-based algorithms focus on improving the accuracy of lane-line detection by enhancing models, and the application of large models incurs high computing costs. Feature-based algorithms primarily detect lane lines through features such as gradients, directions, and grayscale values of lane-line edge points, which are susceptible to interference from road conditions, leading to inaccurate lane detection.

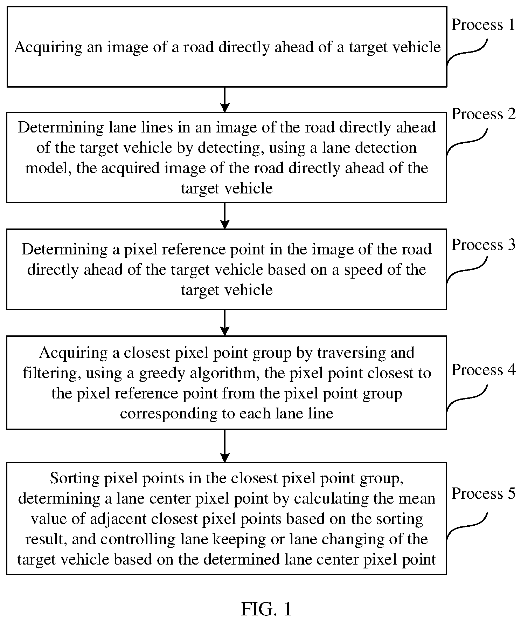

As illustrated in FIG. 1, the embodiment discloses a method for controlling lane keeping and lane changing. The method includes: acquiring an image of a road image directly ahead of a target vehicle; determining lane lines in the image of the road directly ahead of the target vehicle by detecting, using a lane detection model, the acquired image of the road directly ahead of the target vehicle; determining a pixel reference point in the image of the road directly ahead of the target vehicle based on speed of the target vehicle; acquiring the closest pixel point group by traversing and filtering, using a greedy algorithm, the pixel point closest to the pixel reference point from a pixel point group corresponding to each lane line; and sorting pixel points in the closest pixel point group, determining a lane center pixel point by calculating the mean value of adjacent closest pixel points based on the sorting result, and controlling lane keeping or lane changing of the target vehicle based on the determined lane center pixel point.

In some embodiments, the acquired image of the road directly ahead of the target vehicle is preprocessed, wherein preprocessing includes image cropping and normalization.

In some embodiments, determining the pixel reference point in the image of the road directly ahead of the target vehicle based on the speed of the target vehicle includes: determining an image center point of the image of the road directly ahead of the target vehicle; determining a first pixel point above the image center point in the direction away from the target vehicle; determining a second pixel point below the image center point in the direction close to the target vehicle; determining the first pixel point as the pixel reference point of the target vehicle in the case where a traveling speed of the target vehicle is greater than a first speed threshold; and determining the second pixel point as the pixel reference point of the target vehicle in the case where the a traveling speed of the target vehicle is less than the first speed threshold.

In some embodiments, acquiring the closest pixel point group by traversing and filtering, using the greedy algorithm, the pixel point closest to the pixel reference point from the pixel point group corresponding to each lane line includes: calculating a distance between a vertical coordinate of a pixel point corresponding to each lane line and a vertical coordinate of the pixel reference point of the target vehicle; and determining the pixel point closest to the pixel reference point of the target vehicle in each lane line based on distance calculation results.

In some embodiments, sorting pixel points in the closest pixel point group, determining the lane center pixel point by calculating the mean value of adjacent closest pixel points based on the sorting result, and controlling lane keeping or lane changing of the target vehicle based on a determined lane center pixel point include: sorting the pixel points in the closest pixel point group based on horizontal coordinates of the pixel points in the closest pixel point group; determining the lane center pixel point by calculating, based on the sorting result, the mean value of the adjacent closest pixel points; calculating a distance between the lane center pixel point and the pixel reference point of the target vehicle; and controlling the lane keeping or lane changing of the target vehicle based on the calculated distance.

In some embodiments, controlling the lane keeping or lane changing of the target vehicle based on the calculated distance includes: controlling the target vehicle to keep traveling in the lane in the case where the lane center pixel point is the center point of the driving lane of the target vehicle; and controlling the target vehicle to perform lane changing in the case where the lane center pixel point is the center point of the side lane of the target vehicle.

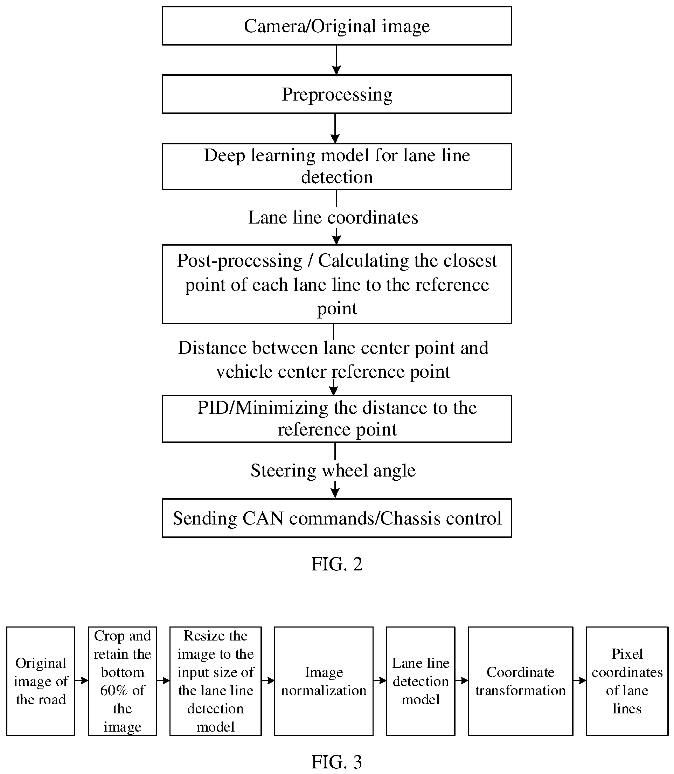

FIG. 2 is a flowchart of a method for controlling lane keeping and lane changing according to the embodiments. Referring to both FIG. 1 and FIG. 2, the method includes the following processes.

Process 1: The image of the road directly ahead of the target vehicle is acquired.

During vehicle operation, to achieve autonomous driving, it is common to acquire information about the road ahead. Therefore, a front-facing camera can be installed above the vehicle's front windshield, as illustrated in FIG. 2. In this method, the front-facing camera can capture images of the road directly ahead of the target vehicle.

As an implementation method, considering coverage and redundancy, the front camera used is an RGB short-focus camera with a field of view of approximately 30 degrees. The front camera can be an industrial camera with a resolution of 720x1080 pixels, which is placed above the front windshield in the cockpit and is not obstructed.

The front camera should be positioned horizontally parallel to the ground, with the ground occupying at least 50% of the overall image. During the installation of the front camera, it is necessary to align the front camera directly in front of the vehicle, ensuring that the center point of the image captured by the front camera is consistent with the centerline of the vehicle.

In the vehicle perception system, vehicles primarily rely on ground information for autonomous navigation, while information such as the sky and roadside trees are considered clutter in the lane keeping system. The vehicle control and computing unit used in the embodiments is the NVIDIA Orin domain control unit.

Process 2: The lane lines in the image of the road directly ahead of the target vehicle are determined by detecting, using a lane detection model, the lane lines in the image of the road directly ahead of the target vehicle.

In the embodiments, the image of the road directly ahead of the target vehicle is detected by employing the lane detection model based on deep learning, thereby acquiring lane line information in the image of the road directly ahead of the target vehicle.

There is a significant amount of invalid information and noise in the original image of the road directly ahead of the target vehicle, which is ineffective for the algorithm. Therefore, in the embodiments, the acquired original image of the road directly ahead of the target vehicle undergoes preprocessing to eliminate this invalid information. This can effectively enhance the speed and robustness of the lane detection algorithm.

As illustrated in FIG. 2, before using the lane detection model for detection, it is necessary to preprocess the acquired original image of the road directly ahead of the target vehicle.

As illustrated in FIG. 3, the preprocessing of the acquired original image of the road directly ahead of the target vehicle specifically includes the following processes.

Process 201: The image needs to be cropped, retaining the bottom 60% of the frame.

Since lane lines are only likely to appear in the ground information at the bottom of the image, cropping the image can effectively improve the utilization rate of information and enhance the performance of deep learning models.

Process 202: The cropped image is resized to the input size for deep learning, and normalization is performed.

During the training of the lane detection model, normalization can accelerate the convergence and improve the accuracy of the network model. Since the image undergoes cropping and enlargement before being input into the lane detection model, the pixel coordinates output by the model are not the pixel coordinates of the actual original image. These coordinates need to be transformed to acquire the pixel coordinates of the original image. As illustrated in FIG. 3, it is necessary to perform coordinate transformation on the pixel coordinates output by the lane detection model to acquire the lane pixel coordinates of the original image.

Process 3: The pixel reference point in the image of the road directly ahead of the target vehicle is determined based on the speed of the target vehicle.

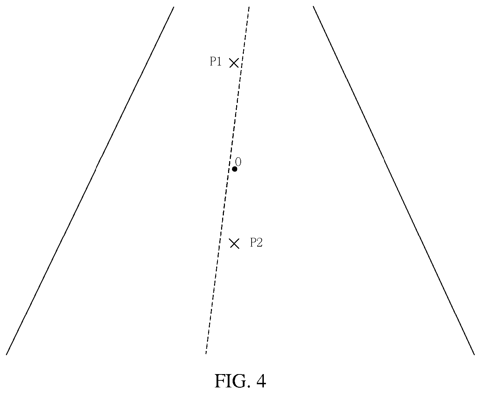

Take the center point O(x, y) of the image captured by the front camera. In process 1, the camera has been adjusted to face directly ahead of the target vehicle, so point O(x, y) represents a fixed distance point directly ahead of the target vehicle. Then, as illustrated in FIG. 4, based on this image center point O, take two points above and below the camera image, namely the first pixel point P1 and the second pixel point P2, which represent fixed positions farther and closer to the target vehicle, respectively. The selection of pixel points is determined based on the camera calibration.

When the target vehicle is traveling at a speed higher than the first speed threshold, the pixel reference point of the target vehicle is selected as the farther pixel point, i.e., the first pixel point P1. When the vehicle is traveling at a speed lower than the first speed threshold, the pixel reference point of the target vehicle is selected as the closer pixel point, i.e., the second pixel point P2.

The first speed threshold can be determined based on the actual situation.

Process 4: The the pixel point closest to the pixel reference point is traversed and filtered, using the greedy algorithm, from the pixel point group corresponding to each lane line, thereby acquiring the closest pixel point group.

By detecting the image of the road directly ahead of the target vehicle acquired through the lane detection model in process 2, a plurality of lane lines will be detected, along with the pixel coordinates of each lane line on the original image.

As illustrated in FIG. 2, after detecting the image of the road directly ahead of the target vehicle using the lane detection model, post-processing is also required, which involves calculating the closest point on each lane line to the reference point.

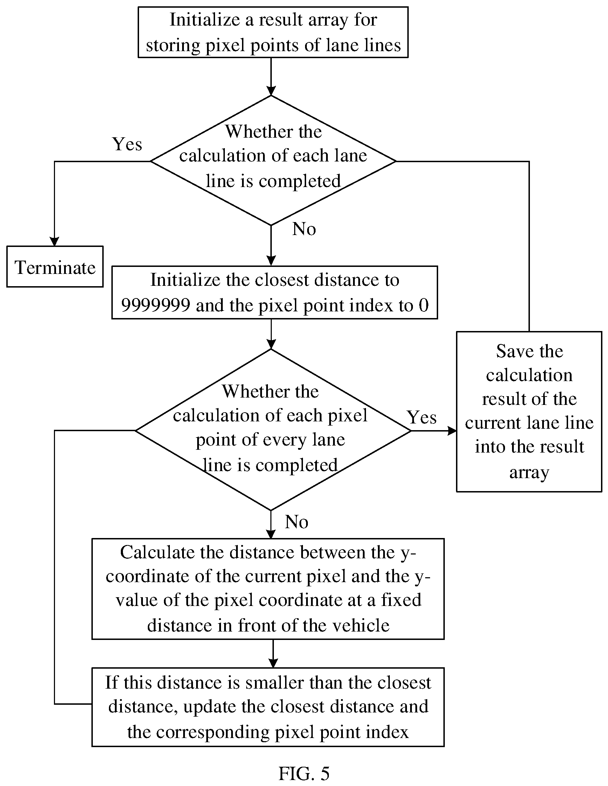

As illustrated in FIG. 5, for each lane line, the closest pixel point D to the pixel reference point P1 or P2 of the vehicle is calculated using the greedy algorithm. Specifically, the calculation involves the following processes.

Process 401: initializing a result array to store the pixel points of the lane lines;
process 402: determining whether each lane line has been calculated; if so, terminating the process; if not, proceeding to process 403;
process 403: initializing the closest distance to 9999999, and setting the pixel index to 0;
process 404: determining whether every pixel point of a lane line has been calculated; if so, saving the result of this lane line in the result array; if not, proceeding to process 405;
process 405: calculating the distance between the y-coordinate value of the pixel point at this moment and the y-value of the pixel reference point P1 or P2 of the vehicle; and
process 406: if this distance is less than the minimum distance, updating the latest distance and the corresponding pixel index, and returning to process 404.

Process 5: The pixel points in the closest pixel point group are sorted, the lane center pixel point is determined by calculating the mean value of adjacent closest pixel points based on the sorting result, and the lane keeping or lane changing of the target vehicle is controlled based on the determined lane center pixel point.

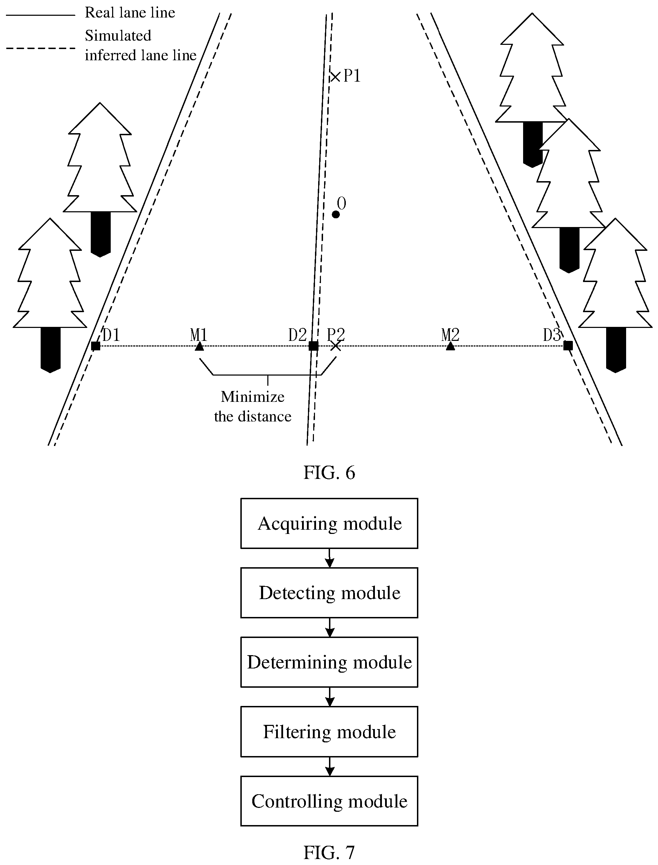

After acquisition of the closest pixel group D, which consists of the closest pixel points of all lane lines based on process 4, the pixel group D is sorted based on the horizontal coordinate x of the pixel sequence. Then, as illustrated in FIG. 6, the average value of D[i] and D[i+1] is calculated for each pair, and this value is the pixel center point M of each lane. When the vehicle speed is fast, the reference point is the far point, i.e., the first pixel point P1; when the vehicle speed is slow, the reference point is the near point, i.e., the second pixel point P2. Here, [i] and [i+1] represent the lower coordinate sequence numbers of the pixel points. For example, the average value between the 0^{th} and 1^{st} pixel points, and the average value between the 1^{st} and 2^{nd} pixel points are calculated.

After acquisition of the pixel coordinates of the lane center, the coordinates are transmitted to the control module. As illustrated in FIG. 2, after acquiring the pixel coordinates of the lane center, it is also necessary to minimize the distance from the reference point. Specifically, the Euclidean distance between the lane center pixel M and the reference pixel P ahead of the vehicle is calculated, and the Proportional Integral Derivative (PID) control method is used to reduce the error. The input of PID is the error between the two points, and the output is the steering angle of the target vehicle. When the lane center pixel M is the center point of the driving lane of the vehicle, the vehicle can maintain its lane; when the lane center pixel M is the center point of the side lane of the vehicle, the vehicle can complete lane changing.

As illustrated in FIG. 7, the embodiments provide an apparatus for controlling lane keeping and lane changing, which includes:
an acquiring module, configured to acquire an image of a road directly ahead of a target vehicle;
a detecting module, configured to determine lane lines in the image of the road directly ahead of the target vehicle by detecting, using a lane line detection model, the acquired image of the road directly ahead of the target vehicle;
a determining module, configured to determine a pixel reference point in the image of the road directly ahead of the target vehicle based on a speed of the target vehicle;
a filtering module, configured to acquire a closest pixel point group by traversing and filtering, using a greedy algorithm, a pixel point closest to the pixel reference point from a pixel point group corresponding to each lane line; and
a controlling module, configured to sort pixel points in the closest pixel point group, determine a lane center pixel point by calculating the mean value of adjacent closest pixel points based on a sorting result, and control lane keeping or lane changing of the target vehicle based on the determined lane center pixel point.

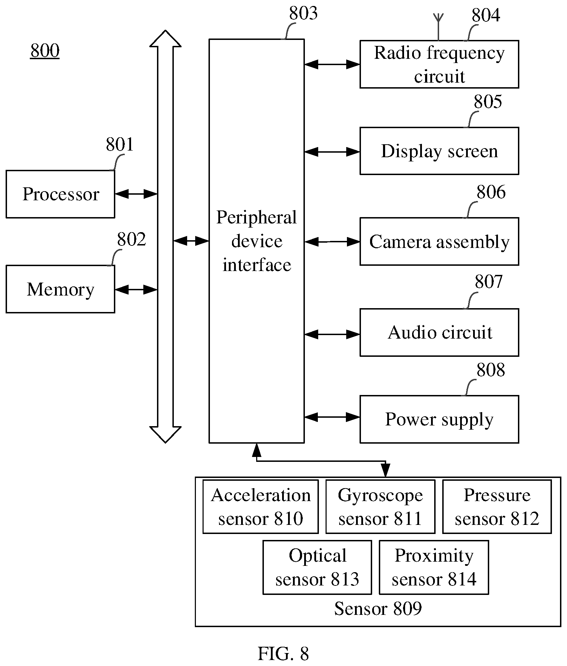

Referring to FIG. 8, it illustrates the structural block diagram of a terminal 800 according to some embodiments of the present disclosure. The terminal 800 can be a portable mobile terminal, such as a smartphone, tablet computer, Moving Picture Experts Group Audio Layer III (MP3) player, Moving Picture Experts Group Audio Layer IV (MP4) player, laptop, or desktop computer. The terminal 800 may also be referred to as user equipment, portable terminal, laptop terminal, desktop terminal, or other names.

Generally, the terminal 800 includes a processor 801 and a memory 802.

The processor 801 can include one or more processing cores, such as a 4-core processor, an 8-core processor, etc. The processor 801 can be implemented using at least one hardware form of Digital Signal Processing (DSP), Field-Programmable Gate Array (FPGA), or Programmable Logic Array (PLA). The processor 801 can also include a main processor and a co-processor. The main processor is a processor configured to process data in the awake state, also referred to as a Central Processing Unit (CPU). The co-processor is a low-power processor configured to process data in the standby state. In some embodiments, the processor 801 can be integrated with a Graphics Processing Unit (GPU), which is responsible for rendering and drawing the content required to be displayed on the display screen. In some embodiments, the processor 801 can also include an Artificial Intelligence (AI) processor, which is configured to process computing operations related to machine learning.

The memory 802 may include one or more computer-readable storage medium, which may be non-transitory. The memory 802 may also include high-speed random access memory, as well as non-volatile memory, such as one or more disk storage devices and flash memory storage devices. In some embodiments, the non-transitory computer-readable storage medium in the memory 802 is configured to store at least one program code, wherein the at least one program code, when executed by the processor 801, causes the terminal to perform the motor end cap optimization method according to the method embodiments in the present disclosure.

In some embodiments, the terminal 800 can optionally include: a peripheral device interface 803 and at least one peripheral device. The processor 801, the memory 802, and the peripheral device interface 803 can be connected via a bus or signal line. Each peripheral device can be connected to the peripheral device interface 803 through a bus, signal line, or circuit board. Specifically, the peripheral device includes at least one of the following: a radio frequency circuit 804, a display screen 805, a camera assembly 806, an audio circuit 807, and a power supply 808.

The peripheral device interface 803 can be configured to connect at least one Input/Output (I/O) related peripheral device to the processor 801 and the memory 802. In some embodiments, the processor 801, the memory 802, and the peripheral device interface 803 are integrated onto the same chip or circuit board; in some other embodiments, any one or two of the processor 801, the memory 802, and the peripheral device interface 803 can be implemented on separate chips or circuit boards, which is not limited in the embodiments.

The radio frequency (RF) circuit 804 is configured to receive and transmit RF signals, also referred to as electromagnetic signals. The RF circuit 804 communicates with communication networks and other communication devices through electromagnetic signals. The RF circuit 804 converts electrical signals into electromagnetic signals for transmission, or converts received electromagnetic signals into electrical signals. Optionally, the RF circuit 804 includes: an antenna system, an RF transceiver, one or more amplifiers, a tuner, an oscillator, a digital signal processor, a codec chipset, a user identity module card, and so on. The RF circuit 804 can communicate with other terminals through at least one wireless communication protocol. The wireless communication protocol includes but is not limited to: the World Wide Web, metropolitan area networks, intranets, various generations of mobile communication networks (2G, 3G, 4G, and 5G), wireless local area networks, and/or Wireless Fidelity (Wi-Fi) networks. In some embodiments, the RF circuit 804 may also include circuits related to Near Field Communication (NFC), which is not limited by the present disclosure.

The display screen 805 is configured to display the User Interface (UI). The UI can include graphics, text, icons, videos, and any combination thereof. When the display screen 805 is a touch display screen, it also has the ability to capture touch signals on or above its surface. These touch signals can be input as control signals to the processor 801 for processing. At this time, the display screen 805 can also be used to provide virtual buttons and/or virtual keyboards, also referred to as soft buttons and/or soft keyboards. In some embodiments, there can be one display screen 805, which is arranged on the front panel of the terminal 800; in other embodiments, there can be at least two display screens 805, which are arranged on different surfaces of the terminal 800 or in a folding design; in yet other embodiments, the display screen 805 can be a flexible display screen, arranged on the curved surface or folding surface of the terminal 800. Furthermore, the display screen 805 can also be arranged in a non-rectangular irregular shape, also referred as a shaped screen. The display screen 805 can be made of materials such as Liquid Crystal Display (LCD) or Organic Light-Emitting Diode (OLED).

The camera assembly 806 is configured to capture images or videos. Optionally, the camera assembly 806 includes a front camera and a rear camera. Generally, the front camera is arranged on the front panel of the terminal, and the rear camera is arranged on the back of the terminal. In some embodiments, there are at least two rear cameras, including a main camera, a depth-of-field camera, a wide-angle camera, and a telephoto camera, to achieve the background blurring function by integrating the main camera and the depth-of-field camera, the panoramic shooting function by integrating the main camera and the wide-angle camera, the Virtual Reality (VR) shooting function, or other integrated shooting functions. In some embodiments, the camera assembly 806 may further include a flashlight. The flashlight can be a single color temperature flashlight or a dual color temperature flashlight. A dual color temperature flashlight refers to a combination of a warm light flashlight and a cold light flashlight, which can be used for light compensation under different color temperatures.

The audio circuit 807 can include a microphone and a speaker. The microphone is configured to capture sound waves from the user and the environment, and convert the sound waves into electrical signals that are input to the processor 801 for processing, or input to the radio frequency circuit 804 to enable voice communication. For the purpose of stereo capture or noise reduction, there can be a plurality of microphones, each placed at different locations on the terminal 800. The microphones can also be array microphones or omnidirectional capture microphones. The speaker is used to convert electrical signals from the processor 801 or the radio frequency circuit 804 into sound waves. The speaker can be a traditional thin-film speaker or a piezoelectric ceramic speaker. When the speaker is a piezoelectric ceramic speaker, it can not only convert electrical signals into audible sound waves but also into inaudible sound waves for purposes such as ranging. In some embodiments, the audio circuit 807 can also include an earphone jack.

The power supply 808 is configured to supply power to various components in the terminal 800. The power supply 808 can be an alternating current (AC) power supply, a direct current (DC) power supply, a disposable battery, or a rechargeable battery. When the power supply 808 includes a rechargeable battery, the rechargeable battery can be a wired charging battery or a wireless charging battery. A wired charging battery is a battery that is charged through wired lines, while a wireless charging battery is a battery that is charged through wireless coils. The rechargeable battery can also be used to support fast charging technology.

In some embodiments, the terminal 800 further includes one or more sensors 809. The one or more sensors 809 include, but are not limited to: an acceleration sensor 810, a gyroscope sensor 811, a pressure sensor 812, an optical sensor 813, and a proximity sensor 814.

The acceleration sensor 810 can detect the magnitude of acceleration on the three coordinate axes of the coordinate system established by the terminal 800. For example, the acceleration sensor 810 can be configured to detect the components of gravitational acceleration on the three coordinate axes. The processor 801 can control the display screen 805 to display the user interface in landscape or portrait view based on the gravitational acceleration signal captured by the acceleration sensor 810. The acceleration sensor 810 can also be configured for game play or the capture of user's motion data.

The gyroscope sensor 811 can detect the body orientation and rotation angle of the terminal 800, and it can collaborate with the accelerometer sensor 810 to capture the user's 3D motions on the terminal 800. Based on the data collected by the gyroscope sensor 811, the processor 801 can implement the following functions: motion sensing (such as changing the UI based on the user's tilt operation), image stabilization during shooting, game control, and inertial navigation.

The pressure sensor 812 can be arranged on the side frame of the terminal 800 and/or beneath the display screen 805. When the pressure sensor 812 is arranged on the side frame of the terminal 800, it can detect the user's grip signal on the terminal 800, and the processor 801 can perform left and right hand recognition or shortcut operations based on the grip signal captured by the pressure sensor 812. When the pressure sensor 812 is arranged beneath the display screen 805, the processor 801 can control the operable controls on the UI interface based on the user's pressure operation on the display screen 805. The operable controls include at least one of button controls, scroll bar controls, icon controls, and menu controls.

The optical sensor 813 is configured to capture the ambient light intensity. In an embodiment, the processor 801 can control the display brightness of the display screen 805 based on the ambient light intensity captured by the optical sensor 813. Specifically, when the ambient light intensity is high, the display brightness of the display screen 805 is increased; when the ambient light intensity is low, the display brightness of the display screen 805 is decreased. In another embodiment, the processor 801 can also dynamically adjust the shooting parameters of the camera assembly 806 based on the ambient light intensity captured by the optical sensor 813.

The proximity sensor 814, also referred to as a distance sensor, is typically arranged on the front panel of the terminal 800. The proximity sensor 814 is configured to capture the distance between the user and the front of the terminal 800. In an embodiment, when the proximity sensor 814 detects that the distance between the user and the front of the terminal 800 is gradually decreasing, the processor 801 controls the display screen 805 to switch from a screen-on state to a screen-off state; when the proximity sensor 814 detects that the distance between the user and the front of the terminal 800 is gradually increasing, the processor 801 controls the display screen 805 to switch from a screen-off state to a screen-on state.

Those skilled in the art can understand that the structure illustrated in FIG. 8 does not constitute a limitation on terminal 800, and may include more or fewer components than illustrated, or combine certain components, or adopt different component arrangements.

In exemplary embodiments, a computer-readable storage medium is also provided, which stores at least one program code. The at least one program code, when loaded and executed by a processor, causes the processor to perform the motor end cap optimization method in the aforementioned embodiments.

In exemplary embodiments, a computer program product is also provided, which stores at least one program code, wherein the at least one program code, when loaded and executed by a processor, causes the processor to perform the motor end cap optimization method in the above embodiments.

Those skilled in the art can understand that all or part of the processes for implementing the above embodiments can be accomplished through hardware, or by instructing relevant hardware through a program. The program can be stored in a computer-readable storage medium, and the aforementioned storage medium can be a read-only memory, magnetic disk, optical disk, etc.

The above description is only intended to facilitate the understanding of the technical solution of the present disclosure by those skilled in the art, and is not intended to limit the present disclosure. Any modifications, equivalent substitutions, improvements, etc. made within the spirit and principles of the present disclosure shall be included within the scope of protection of the present disclosure.

## Claims

1. A method for controlling lane keeping and lane changing, comprising:
acquiring an image of a road directly ahead of a target vehicle;
determining lane lines in the image of the road directly ahead of the target vehicle by detecting, using a lane detection model, the acquired image of the road directly ahead of the target vehicle;
determining a pixel reference point in the image of the road directly ahead of the target vehicle based on a speed of the target vehicle;
acquiring a closest pixel point group by traversing and filtering, using a greedy algorithm, a pixel point closest to the pixel reference point from a pixel point group corresponding to each lane line; and
sorting pixel points in the closest pixel point group, determining a lane center pixel point by calculating a mean value of adjacent closest pixel points based on a sorting result, and controlling lane keeping or lane changing of the target vehicle based on the determined lane center pixel point.

2. The method according to claim 1, wherein the acquired image of the road directly ahead of the target vehicle is preprocessed, wherein preprocessing comprises image cropping and normalization.

3. The method according to claim 1, wherein determining the pixel reference point in the image of the road directly ahead of the target vehicle based on the speed of the target vehicle comprises:
determining an image center point of the image of the road directly ahead of the target vehicle;
determining a first pixel point above the image center point in a direction away from the target vehicle;
determining a second pixel point below the image center point in a direction close to the target vehicle;
determining the first pixel point as the pixel reference point of the target vehicle in a case where a traveling speed of the target vehicle is greater than a first speed threshold; and
determining the second pixel point as the pixel reference point of the target vehicle in a case where the traveling speed of the target vehicle is less than the first speed threshold.

4. The method according to claim 1, wherein acquiring the closest pixel point group by traversing and filtering, using the greedy algorithm, the pixel point closest to the pixel reference point from the pixel point group corresponding to each lane line comprises:
calculating a distance between a vertical coordinate of a pixel point corresponding to each lane line and a vertical coordinate of the pixel reference point of the target vehicle; and
determining the pixel point closest to the pixel reference point of the target vehicle in each lane line based on distance calculation results.

5. The method according to claim 1, wherein sorting pixel points in the closest pixel point group, determining the lane center pixel point by calculating the mean value of adjacent closest pixel points based on the sorting result, and controlling lane keeping or lane changing of the target vehicle based on a determined lane center pixel point comprise:
sorting the pixel points in the closest pixel point group based on horizontal coordinates of the pixel points in the closest pixel point group;
determining the lane center pixel point by calculating, based on a sorting result, the mean value of the adjacent closest pixel points;
calculating a distance between the lane center pixel point and the pixel reference point of the target vehicle; and
controlling the lane keeping or lane changing of the target vehicle based on the calculated distance.

6. The method according to claim 5, wherein controlling the lane keeping or lane changing of the target vehicle based on the calculated distance comprises: controlling the target vehicle to keep traveling in the lane in a case where the lane center pixel point is a center point of a driving lane of the target vehicle; and controlling the target vehicle to perform lane changing in a case where the lane center pixel point is a center point of a side lane of the target vehicle.

7. An apparatus for controlling lane keeping and lane changing, comprising:
an acquiring module, configured to acquire an image of a road directly ahead of a target vehicle;
a detecting module, configured to determine lane lines in an image of the road directly ahead of the target vehicle by detecting, using a lane line detection model, the acquired image of the road directly ahead of the target vehicle;
a determining module, configured to determine a pixel reference point in the image of the road directly ahead of the target vehicle based on a speed of the target vehicle;
a filtering module, configured to acquire a closest pixel point group by traversing and filtering, using a greedy algorithm, a pixel point closest to the pixel reference point from a pixel point group corresponding to each lane line; and
a controlling module, configured to sort pixel points in the closest pixel point group, determine a lane center pixel point by calculating a mean value of adjacent closest pixel points based on a sorting result , and control lane keeping or lane changing of the target vehicle based on the determined lane center pixel point.

8. An electronic device, comprising a memory, a processor, and computer instructions stored on the memory and executed by the processor, wherein the computer instructions, when executed by the processor, cause the electronic device to perform the method as defined in any one of claims 1 to 6.

9. A computer-readable storage medium, configured to store computer instructions, wherein the computer instructions, when executed by a processor, cause the processor to perform the method as defined in any one of claims 1 to 6.

10. A computer program product, comprising a computer program, wherein the computer program, when executed by a processor, causes the processor to perform the method as defined in any one of claims 1 to 6.
